# EUROPÄISCHE PATENTSCHRIFT

(11) **EP 1 924 510 B1**
(45) Veröffentlichungstag und Bekanntmachung des Hinweises auf die Patenterteilung: **08.10.2008**
(21) Anmeldenummer: 06791651.0
(22) Anmeldetag: 25.08.2006
(51) Int. Cl.: B65D 57/00, B65D 83/08

(54) **WAFERVIAL MIT INTERNEN ZWISCHENLAGEN**
WAFER VIAL PROVIDED WITH INTERNAL INTERMEDIATE LAYERS
RECIPIENT A LAMELLES, MUNI DE COUCHES INTERMEDIAIRES INERTES

(30) Priorität: 07.09.2005 DE 102005042374
(43) Veröffentlichungstag der Anmeldung: 28.05.2008
(73) Patentinhaber: LTS LOHMANN Therapie-Systeme AG, 56626 Andernach (DE)
(72) Erfinder: ASMUSSEN, Bodo, 56170 Bendorf (DE); KRUMME, Markus, Randolph, NJ 07869 (US)
(74) Vertreter: Schmidt, Werner
(86) Internationale Anmeldenummer: PCT/EP2006/008335
(87) Internationale Veröffentlichungsnummer: WO 2007/028507

(56) Entgegenhaltungen:
- DE-A1- 19 800 682
- US-B1- 6 708 826

## Beschreibung

Die Erfindung betrifft eine Verpackungseinheit, die einen Behälter und hygroskopische oder bei Feuchte erweichende filmartige Materialien umfasst.

Hygroskopische filmartige Materialien sind beispielsweise essbare Filme, Streifen oder Wafer, die z.B. als Arzneimittel, Süßwaren, Kosmetika und Produkte zur oralen Hygiene eingesetzt werden. Sie sind beispielsweise schnell wasser- und speichellöslich. Meist sind sie aus hydrophilen und hygroskopischen Matrixpolymeren aufgebaut, wie z.B. Polysaccharide der Stärke- oder Cellulosefamilie, Polyvinylpyrrolidon, Polyvinylalkohol oder Pullulan. Sie haben eine hohe Affinität zu Wasser und nehmen dieses begierig auf. Bei der Anwendung im Mund bewirkt dies eine schnelle Auflösung, bei der Lagerung wird jedoch eine große Wassermenge aus der Luftfeuchtigkeit aufgenommen. Die filmartigen Materialien haben eine Mindestfeuchtigkeit von 5 Gewichtsprozent Wasser. Bei einem niedrigeren Feuchtigkeitsgehalt können sie brüchig werden. Bei einem Feuchtigkeitsgehalt über 10 Massenprozent werden die hygroskopischen oder bei Feuchte erweichenden filmartigen Materialien weich und neigen zur plastischen Verformung. Außerdem nimmt mit zunehmendem Feuchtigkeitsgehalt die Klebeneigung der filmartigen Materialien zu, was die Handhabung und insbesondere die gezielte Einzelentnahme erschwert.

Aus der DE 198 00 682 A1 ist eine Verpackungseinheit hygroskopischer filmartiger Materialien bekannt. Die filmartigen Materialien werden zunächst einzeln in Primärverpackungseinheiten verpackt. In einer Sekundärverpackungseinheit werden dann mehrere Primärverpackungseinheiten gruppiert. Dies ist aufwendig und teuer.

Aus der US-A-6 708 826 ist eine Verpackungseinheit bekannt, die Pakete mit zwei filmartigen Materialien enthält. Das Material zwischen dem zwei Folienmaterialien ist ein Klebemittel.

Der vorliegenden Erfindung liegt daher die Problemstellung zugrunde, eine Verpackungseinheit mit einem Behälter zu entwickeln, aus der die Einzelentnahme hygroskopischer oder bei Feuchte erweichende filmartiger Materialien zuverlässig gewährleistet ist.

Diese Problemstellung wird mit den Merkmalen des Hauptanspruches gelöst. Dazu sind die filmartigen Materialien im Behälter gestapelt angeordnet. Zwischen jeweils zwei filmartigen Materialien ist ein gegenüber diesen filmartigen Materialien chemisch inertes und physikalisch beständiges Trennmaterial angeordnet. Das Trennmaterial kontaktiert jeweils die beiden genannten filmartigen Materialien. Außerdem haftet das Trennmaterial an mindestens einem dieser beiden filmartigen Materialien nicht oder weniger stark als an dem jeweils anderen filmartigen Material an.

Weitere Einzelheiten der Erfindung ergeben sich aus den Unteransprüchen und der nachfolgenden Beschreibung schematisch dargestellter Ausführungsformen.
- Figur 1:: Schachtel mit Wafern und Trennmaterialien;
- Figur 2:: Trennmaterial;
- Figur 3:: Wafer;
- Figur 4:: Schachtel mit mechanisch arretierten Wafern und Trennmaterialien;
- Figur 5:: Detail des Stapels aus Figur 4;
- Figur 6:: Wafer mit Arretierung;
- Figur 7:: Trennmaterial mit Wafer.

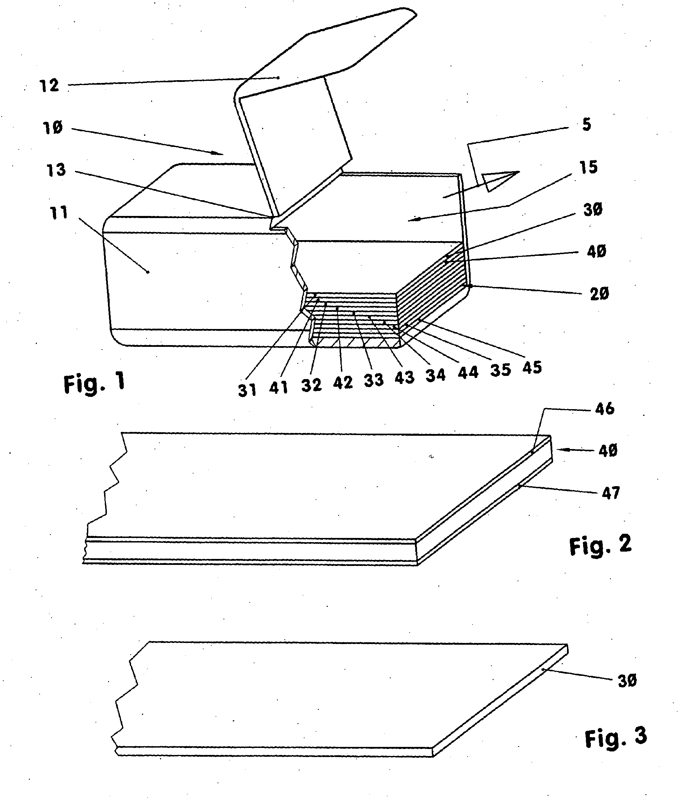

Die Figur 1 zeigt einen Behälter (10) mit darin gestapelt angeordneten filmartigen Materialien (30), zwischen denen Trennmaterialien (40) liegen.

Der Behälter (10) ist beispielsweise eine Schachtel, ein Wafervial, etc. aus Kunststoff, Glas oder einem anderen Werkstoff, der Aromen oder Wirkstoffe der filmartigen Materialien (30) nicht absorbiert. Die in der Figur 1 dargestellte Schachtel (10) ist beispielsweise quaderförmig. Sie besteht z.B. aus einem Gehäuse (11) und einem aufklappbaren Deckel (12). Der Deckel (12) ist in diesem Ausführungsbeispiel mittels eines Filmgelenks (13) mit dem Gehäuse (11) verbunden. Der Deckel (12) kann auch als Schiebedeckel, abnehmbarer Deckel, etc. ausgebildet sein. Die Ecken und Kanten der Schachtel (10) sind beispielsweise abgerundet. Bei geschlossenem Deckel (12) ist die Schachtel (10) z.B. weitgehend dicht gegen das Eindringen von Fremdstoffen. Gegebenenfalls können am Deckel (12) und/oder am Gehäuse (11) zusätzliche Dichtelemente angeordnet sein, um zumindest während der Lagerung die Schachtel (10) hermetisch zu verschließen

Im Innenraum (15) der Schachtel (10) befindet sich ein Stapel (20) mit geschichtet angeordneten filmartigen Materialien (30) und Trennmaterialien (40). Die filmartigen Materialien (30) sind beispielsweise einzelne Wafer (31 - 35), die Aromen und Wirkstoffe enthalten. Jeder dieser Wafer (31 - 35) beinhaltet z.B. eine Dosis eines Arzneimittels. In der in der Figur 1 dargestellten Mehrdosenverpackung sind z.B. fünf Wafer (31 - 35), also fünf Arzneimitteldosen, verpackt. Hierbei ist der Wafer (31) der oberste Wafer im Stapel (20), während der Wafer (35) der unterste der gestapelten Wafer (31 - 35) ist.

Die Wafer (31 - 35) haben eine beispielsweise rechteckige Grundfläche von z. B. 1 in * 1^{⅓} in, vgl. Figur 3. Die Grundfläche kann auch quadratisch, rund, dreieckig, sechseckig, etc. sein. Die hier überhöht dargestellte Stärke der Wafer (31 - 35) liegt z.B. zwischen 10 und 100 Mikrometer. In den meisten Anwendungsfällen sind die Wafer (31 - 35) zwischen 20 und 60 Mikrometer stark, sie können aber auch bis zu 250 Mikrometer stark ausgebildet sein. Die Masse der Wafer (31 - 35) liegt zwischen 40 und 100 Milligramm. Die Wafer (31 - 35) sind hygroskopisch oder erweichen bei einem erhöhten Feuchtigkeitsgehalt und haben hier einen voreingestellten Feuchtigkeitsgehalt von z.B. fünf Massenprozent. Der voreingestellte Feuchtigkeitsgehalt kann niedriger als dieser Wert sein, beispielsweise drei Massenprozent, solange die Wafer (31 - 35) nicht brüchig werden. Auch ein höherer Wert des Feuchtigkeitsgehalts ist denkbar.

Die Trennmaterialien (40), vgl. Figur 2, sind beispielsweise Folienabschnitte (41 - 45) beidseitig beschichteter Kunststofffolien. Hierbei liegt beispielsweise die Trennfolie (41) im Stapel (20) zwischen den Wafern (31) und (32). Die Trennfolie (45) liegt hier unterhalb des Wafers (35). Die Trennfolien (41 - 45) haben z.B. rechteckige Grundflächen, die hier gleich groß sind wie die Grundflächen der Wafer (31 - 35). Die Grundfläche der Trennfolien (41 - 45) kann auch größer sein als die Grundfläche der Wafer (31 - 35). Ihre Stärke liegt beispielsweise zwischen 10 Mikrometern und 100 Mikrometern.

Der Grundwerkstoff der Trennfolien (41 - 45) ist z.B. Polyethylenterephthalat, PET. Dieser Werkstoff ist bei Kontakt der Trennfolien (41 - 45) mit den Wafern (31 - 45) unabhängig vom Feuchtigkeitsgehalt der Wafers (31 - 35) diesen gegenüber physikalisch beständig und chemisch inert.

Die Beschichtungen (46, 47) auf beiden Seiten der Trennfolien (41 - 45) sind beispielsweise Silikonbeschichtungen. Hierbei ist z.B. die Beschichtung (46) die Beschichtung der Oberseite der Trennfolien (41 - 45), während die Beschichtung (47) die Beschichtung der Unterseite der Trennfolien (41 - 45) ist. Beide Beschichtungen (46, 47) haben in diesem Ausführungsbeispiel die gleiche Stärke, sie unterscheiden sich aber in ihren Eigenschaften. Die jeweils obere Beschichtung (46) ist hier derart ausgebildet, dass der Wafer (31 - 35), der im Stapel (20) oberhalb der Trennfolien (41 - 45) liegt, an ihr haftet. Die Haftverbindung der Wafers (31 - 35) mit den Beschichtungen (46) ist z.B. so gestaltet, dass z.B. bei der Entnahme des obersten Wafers (31) aus der Schachtel (10) die oberste Trennfolie (41) mit entnommen wird. Diese Haftverbindung ist beispielsweise eine adhäsive Verbindung. Eine adhäsive Verbindung ist eine Haftverbindung zwischen einer festen Grenzfläche und einer zweiten Phase, die entweder aus individuellen Teilchen, Molekülen, Tröpfchen, Pulvern oder aus einem kontinuierlichen flüssigen oder festen Film bestehen kann. Die Adhäsion kann durch elektrostatische Kräfte, durch van-der-Waals-Kräfte oder durch chemische Bindungen bedingt sein.

Die in diesem Ausführungsbeispiel jeweils untere Beschichtung (47) der Trennfolien (41 - 45) hingegen ist dehäsiv gestaltet. So haftet z.B. der Wafer (32), der im Stapel (20) unterhalb der Trennfolie (41) liegt, nicht an der unteren Beschichtung (47) dieser Trennfolie (41). Bei der Entnahme des Wafers (31) ist somit sichergestellt, dass nur ein einzelner Wafer (31) aus der Schachtel (10) entnommen wird.

Die hier als dehäsive Beschichtung (47) bezeichnete Beschichtung (47) kann auch an den Wafern (32 - 35) anhaften. Hierbei sind aber die Haftkräfte geringer als die Haftkräfte zwischen der adhäsiven oberen Beschichtung (46) und den Wafern (31 - 35).

Die Beschichtungen (46, 47) können den Wirkstoff der Wafer (31 - 35) nicht aufnehmen. Sie bilden so eine Diffusionsbarriere und verhindern die Migration des Wirkstoffes der Wafer (31 - 35) in die Trennfolien (41 - 45). Damit verändert sich selbst bei einer langen Lagerung des Behälters (10) in einer feuchten Umgebung das Trennmaterial (40) nicht.

Anstatt der beschriebenen Silikonbeschichtungen (46, 47) können auch Beschichtungen aus Fluorpolymerschichten oder polyolefinische Beschichtungen (PE, PP) eingesetzt werden. Auch bei diesen Beschichtungen sind die Kontakt- und Trennkräfte so eingestellt, dass einer der beiden am Trennmaterial (40) anliegenden filmartigen Materialien (30) an diesem anhaftet, während das andere filmartige Material (30) nicht anhaftet.

Das Trennmaterial (40), z.B. eine PET-Folie, kann so ausgebildet sein, dass es z.B. nur eine untere Silikonbeschichtung (47) aufweist. Diese ist beispielsweise dehäsiv eingestellt, so dass der im Stapel (20) z.B. unterhalb der Trennfolie (41) liegende Wafer (32) an dieser Trennfolie (41) nicht anhaftet.

Das Trennmaterial (40) kann auch ein Papier sein, das beidseitig eine Polyethylenbeschichtung aufweist. Zumindest eine Seite ist dann zusätzlich z.B. mit einer Silikonschicht (47) beschichtet. So steht dann beispielsweise eine haftende Polyethylenschicht (46) in Verbindung mit dem oberen Wafer (31). Die dann untenliegende Silikonschicht (47) haftet nicht an dem Wafer (32), der unterhalb des Trennpapiers (41) liegt.

Auch andere Werkstoffe sind für die Trennmaterialen (40) denkbar. Dies können Kunststofffolien, Verbundwerkstoffe etc. sein, die chemisch inert und physikalisch beständig gegenüber den Wirkstoffen und Aromen der filmartigen Materialien (30) sind.

Es ist auch denkbar, dass beide Oberflächen des Trennmaterials (40) dehäsiv ausgestaltet oder beschichtet sind. So kann beispielsweise eine dünne Polyethylenterephthalatfolie so eingestellt sein, dass die filmartigen Materialien (30) nicht an ihr haften.

Die unterschiedlichen Hafteigenschaften der Oberflächen des Trennmaterials (40) können somit bei einem unbeschichteten Trennmaterial (40) bereits bei der Herstellung oder durch eine sekundäre Beschichtung (46; 47) eines Grundwerkstoffes erzeugt werden.

Das filmartige Material (30) kann auch auf dem Trennmaterial (40) selbst hergestellt werden. Hierbei wird z.B. der spätere Trennlayer (40) mit einem wirkstoffhaltigen Film (30) beschichtet. Beim Trocknen nach der Beschichtung haftet der Film (30) am Trennlayer (40) beispielsweise adhäsiv an. Nach dem Trocknen - hierbei behält das filmartige Material (30) eine Restfeuchtigkeit - werden die filmartigen Materialien (30) mit den Trennlayern (40) z.B. gestapelt und in die Schachtel (10) eingeführt. Da das filmartige Material (30),z.B. der Wafer (32), das im Stapel (20) unterhalb des Trennlayers (40), z.B. der Trennfolie (41) liegt, erst jetzt mit dieser Trennfolie (41) in Kontakt kommt, haften diese beiden Teile (32, 41) nicht aneinander.

Die auf den Trennmaterialien (40) hergestellten und getrockneten filmartigen Materialien (30) können auch auf eine Rolle aufgewickelt werden. Auch hierbei haftet das filmartige Material (30), das sich in radialer Richtung der Rolle außerhalb des Trennmaterials (40) befindet, nicht an diesem Trennmaterial (40). Hierdurch wird beim Aufrollen und/oder beim Abrollen ein Abreißen des filmartigen Material (30) verhindert. Damit kann das Trennmaterial (40) der Rolle später in der Schachtel (10) z.B. in Form der Trennfolien (41 - 45) weiterverwendet werden.

Während der Lagerung der Verpackungseinheit ändert sich die Luftfeuchtigkeit des Lagerraumes. Bei einer nicht hermetisch abgedichteten Schachtel (10) dringt bei steigender Umgebungsfeuchtigkeit die Feuchtigkeit an die filmartigen Materialien (30). Diese nehmen Feuchtigkeit auf. Nimmt die Umgebungsfeuchtigkeit ab, sinkt auch der Feuchtigkeitsgehalt der filmartigen Materialien (30). Bei den in Mitteleuropa üblichen Wetterbedingungen schwankt die Feuchtigkeit in den einzelnen filmartigen Materialien (30) z.B. zwischen fünf und zehn Massenprozent. Wird jedoch die Schachtel (10) in einem z.B. tropischen Klima gelagert, kann die Feuchtigkeitsaufnahme so hoch sein, dass das filmartige Material (30) weich wird und zum Kleben neigt. Dies kann an warmen Tagen auch z.B. beim Tragen der Schachtel (10) in der Brusttasche eines Hemdes passieren. Die einzelnen filmartigen Materialien (30) haften nun verstärkt auf der z.B. oberen Beschichtung (46) der Trennmaterialien (40). Bei der in der Figur 1 dargestellten Schachtel (10) haftet beispielsweise der Wafer (31) auf der oberen Beschichtung (46) der Trennfolie (41). Die dehäsive untere Beschichtung (47) dieser Trennfolie (41) verhindert ein Anhaften des unterhalb der Trennfolie (41) liegenden Wafers (32) an dieser Trennfolie (41).

Zur Entnahme der Wafer (31 - 35) aus der in der Figur 1 dargestellten Schachtel (10) wird bei geöffnetem Deckel (12) der oberste Wafer (31) mit den Fingern gegriffen und in der Entnahmerichtung (5) aus der Schachtel (10) herausgezogen. Beim Herausziehen des Wafers (31) wird die an ihm haftende Trennfolie (41) mitgezogen. Der nachfolgende Wafer (32) verbleibt im Stapel (20). Der Stapel (20) kann somit sicher und zuverlässig vereinzelt werden. Bei Wafern (31 - 35), die als Wirkstoffe Arzneimittel enthalten, besteht damit keine Gefahr, dass unbeabsichtigt mehr als eine Dosis des Arzneimittels aus der Schachtel (10) entnommen wird.

Nach dem Herausnehmen kann der Wafer (31) von der Trennfolie (41) z.B. durch Abziehen getrennt werden. Der Wafer (31) kann nun z.B. auf die Zunge zur oralen Einnahme gelegt werden.

Um das Trennen des wirkstoffhaltigen Films (30) vom Trennmaterial (40) zu erleichtern, kann das Trennmaterial (40) eine höhere Steifigkeit aufweisen als der Film (30). So kann beispielsweise bei Einsatz eines Trennmaterials (40) aus einer biaxial gereckten PET-Folie sowohl der Film (30) als auch das Trennmaterial (40) eine Stärke von 35 Mikrometern haben. Bei der Verwendung eines Trennmaterials (40) aus Papier hat dieses z.B. eine Stärke von 100 Mikrometern.

Die Verpackungseinheit ist somit kostengünstig herstellbar und ermöglicht selbst bei filmartigen Materialien (30), die während der Lagerung Feuchtigkeit aufgenommen haben, eine sichere und zuverlässige Entnahme.

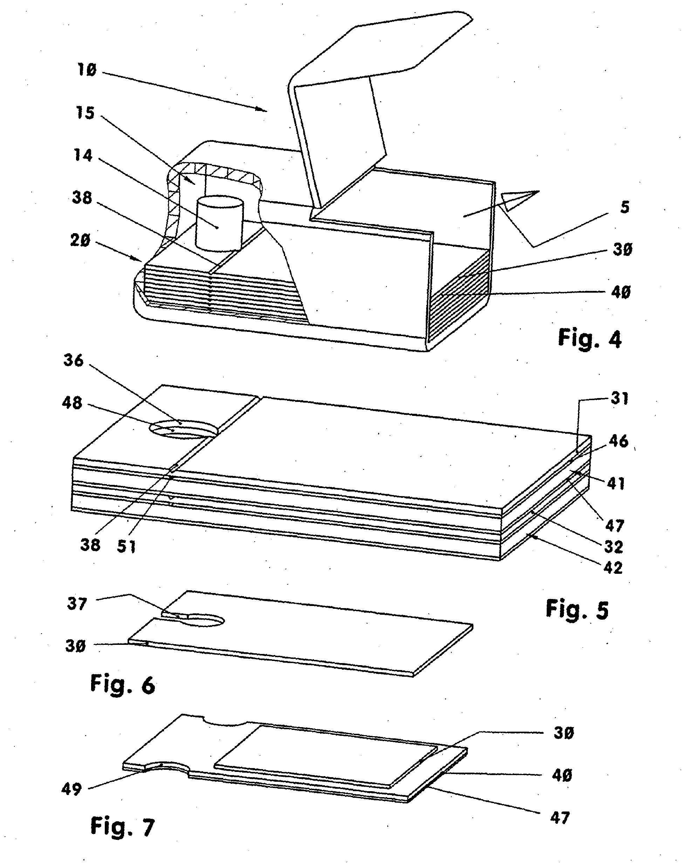

Die Figur 4 zeigt eine Schachtel (10) mit mechanisch arretierten Wafern (31 - 35) und Trennfolien (41 - 45). Die Schachtel (10), die Wafer (31 - 35) und die Trennmaterialien (41 - 45) haben zumindest annähernd die gleiche Gestalt und die gleichen physikalischen und chemischen Eigenschaften wie die im Zusammenhang mit den Figuren 1 bis 3 beschriebenen Teile (10; 30; 40).

Im Innenraum (15) der in der Figur 4 dargestellten Schachtel (10) sitzt ein Stapel (20) aus Wafern (31 - 35) und Trennfolien (41 - 45). Durch diesen Stapel (20) ragt ein ebenfalls im Innenraum (15) angeordneter senkrechter Bolzen (14). Die Wafer (31 - 35) und die Trennfolien (41 - 45) haben hierfür Bohrungen (36, 48). Die Figur 5 zeigt ein Detail des Stapels (20) mit zwei Wafern (31, 32) und zwei Trennfolien (41, 42). Die Wafer (31, 32) und die Trennfolien (41, 42) haben hier die gleichen Grundflächen. Zwischen den beiden Wafern (31, 32) ist eine beidseitig beschichte Trennfolie (41) angeordnet. Hierbei ist die obere Beschichtung (46) so ausgebildet, das der obenliegende Wafer (31), der zuerst entnommen wird, an ihr haftet. Die untere Beschichtung (47) der Trennfolie (41) ist beispielsweise eine Silikonbeschichtung, an der der im Stapel (20) unterhalb liegende Wafer (32) nicht anhaftet. Das in dem in der Figur 5 dargestellten Stapel (20) untenliegende Trennmaterial (42) ist genauso aufgebaut wie das erstgenannte Trennmaterial (41).

Die Wafer (31 - 35) und die Trennmaterialien (41 - 45) weisen jeweils eine - hier nur angedeutete - Perforation (38, 51) auf, die quer zur Entnahmerichtung (5) der Wafer (31-35) liegt.

Bei der Entnahme z:B. des ersten Wafers (31) wird der Wafer (31) zusammen mit der Trennfolie (41) gegriffen und mit einem kurzen Ruck aus der Schachtel (10) herausgezogen. Hierbei wird der Wafer (31) und gegebenenfalls die an ihm anhaftende Trennfolie (41) entlang der Perforationen (38, 51) getrennt. Sobald der Wafer (31) von der Trennfolie (41) abgezogen ist, kann er angewendet werden.

Die Figur 6 zeigt beispielsweise ein filmartiges Material (30), das mittels einer Lasche (37) an dem Bolzen (14) arretiert werden kann. Dieses filmartige Material (30) hat beispielsweise keine Perforation (38). Das zugehörige - hier nicht dargestellte - Trennmaterial kann die gleiche Gestalt haben. Das filmartige Material (30) kann beispielsweise so ausgebildet sein, dass er weder an dem im Stapel (20) über ihm liegenden Trennmaterial (40) noch an dem im Stapel (20) unter ihm liegenden Trennmaterial (40) anhaftet. Wird das filmartige Material (30) aus der Schachtel (10) entnommen, wird die Lasche (37) aufgeweitet und nur das filmartige Material (30) herausgezogen. Das Trennmaterial (40) bleibt z.B. als Schutzabdeckung auf dem Stapel (20) liegen. Es wird dann vor der nächsten Entnahme eines filmartigen Materials (30) herausgezogen.

In der Figur 7 ist ein z.B. rechteckiger Wafer (31) dargestellt, der auf einer größeren Trennfolie (41) aufgebracht ist. Die Trennfolie (41) ist hier beispielsweise eine PET-Folie, die nur eine untere Beschichtung (47) hat. Die Trennfolie (41) hat hier seitliche Aussparungen (49), mit denen sie im Innenraum (15) einer Schachtel (10), vgl. Figur 1 oder 4, zwei seitliche Arretierbolzen hintergreifen kann. Zum Entnehmen wird beispielsweise die Trennfolie (41) mit der Hand gegriffen und zusammen mit dem darauf aufgebrachten Wafer (31) aus der Schachtel (10) herausgezogen. Hiernach werden die beiden Teile (31, 41) separiert.

Die filmartigen Materialien (30) und/oder die Trennmaterialien (40) können auch andere geometrische Gestalten aufweisen. Die Stapel (20) können auch umgekehrt angeordnet sein, so dass z.B. die filmartigen Materialien (30) an der Unterseite der Trennmaterialien (40) anhaften.

Auch Kombinationen der einzelnen Ausführungsformen sind denkbar.

### Bezugszeichenliste:

- 5: Entnahmerichtung

- 10: Behälter, Schachtel
- 11: Gehäuse
- 12: Deckel
- 13: Filmgelenk
- 14: Bolzen
- 15: Innenraum

- 20: Stapel

- 30: filmartige Materialien, Filme
- 31-35: Wafer

- 36: Bohrung
- 37: Lasche mit Hintergriff
- 38: Perforation

- 40: Trennmaterialien, Trennlayer
- 41 - 45: Folienabschnitte, Trennfolien, Trennpapiere

- 46: obere Beschichtung, adhäsive Beschichtung
- 47: untere Beschichtung, dehäsive Beschichtung
- 48: Bohrung
- 49: Aussparung

- 51: Perforation

## Patentansprüche

1. Verpackungseinheit, die einen Behälter und hygroskopische oder bei Feuchte erweichende filmartige Materialien umfasst, **dadurch gekennzeichnet,**
- **dass** die filmartigen Materialien (30) im Behälter (10) gestapelt angeordnet sind,
- **dass** zwischen jeweils zwei filmartigen Materialien (30) ein gegenüber diesen filmartigen Materialien (30) chemisch inertes und physikalisch beständiges Trennmaterial (40) angeordnet ist,
- **dass** das Trennmaterial (40) jeweils die beiden genannten filmartigen Materialien (30) kontaktiert und
- **dass** das Trennmaterial (40) an mindestens einem dieser beiden filmartigen Materialien (30) nicht oder weniger stark als an dem jeweils anderen filmartigen Material (30) anhaftet.

2. Verpackungseinheit nach Anspruch 1, **dadurch gekennzeichnet, dass** die filmartigen Materialien (30) einen Mindestfeuchtigkeitsgehalt von drei Massenprozent aufweisen.

3. Verpackungseinheit nach Anspruch 1, **dadurch gekennzeichnet, dass** die Trennmaterialien (40) gleich groß oder größer sind als die filmartigen Materialien (30).

4. Verpackungseinheit nach Anspruch 1, **dadurch gekennzeichnet, dass** der Behälter (10) abgedichtet verschlossen ist.

5. Verpackungseinheit nach Anspruch 1, **dadurch gekennzeichnet, dass** das einzelne Trennmaterial (40) eine PET-Folie ist, die zumindest einseitig eine dehäsive Beschichtung (47) aufweist.

6. Verpackungseinheit nach Anspruch 5, **dadurch gekennzeichnet, dass** die Beschichtung (47) eine Silikonbeschichtung ist.

7. Verpackungseinheit nach Anspruch 5, **dadurch gekennzeichnet, dass** die Beschichtung (47) eine Fluorpolymerbeschichtung ist.

8. Verpackungseinheit nach Anspruch 5, **dadurch gekennzeichnet, dass** die Beschichtung (47) eine polyolefinische Beschichtung ist.

9. Verpackungseinheit nach Anspruch 5, **dadurch gekennzeichnet, dass** das Trennmaterial (40) auf der der dehäsiven Beschichtung (47) abgewandten Seite eine Beschichtung (46) aufweist, die das filmartige Material (30) adhäsiv kontaktiert.

10. Verpackungseinheit nach Anspruch 1, **dadurch gekennzeichnet, dass** zumindest die Trennmaterialien (40) im Behälter (10) mechanisch arretiert sind:

11. Verpackungseinheit nach Anspruch 10, **dadurch gekennzeichnet, dass** zumindest die filmartigen Materialien (30) eine Perforation (38) aufweisen.

## Claims

1. Packaging unit comprising a container and film-like materials that are hygroscopic or soften under the influence of moisture, **characterized in that**:
- the film-like materials (30) are arranged in the container (10) in the form of a stack,
- interposed between any two film-like materials (30), there is a separating material (40) that is physically stable and chemically inert to these film-like materials (30),
- each separating material (40) is in contact with the two film-like materials (30) mentioned, and
- the separating material (40) does not adhere to at least one of these two film-like materials (30) or it adheres to it less strongly than it does to the other film-like material (30) in question.

2. Packaging unit according to Claim 1, **characterized in that** the film-like materials (30) have a minimum moisture content of 3 wt-%.

3. Packaging unit according to Claim 1, **characterized in that** the separating materials (40) have the same size as or are larger than the film-like materials (30).

4. Packaging unit according to Claim 1, **characterized in that** the container (10) is tightly closed.

5. Packaging unit according to Claim 1, **characterized in that** the individual separating material (40) is a PET film with an anti-adhesive coating (47) at least on one side.

6. Packaging unit according to Claim 5, **characterized in that** the coating (47) is a silicone coating.

7. Packaging unit according to Claim 5, **characterized in that** the coating (47) is a fluoropolymer coating.

8. Packaging unit according to Claim 5, **characterized in that** the coating (47) is a polyolefin coating.

9. Packaging unit according to Claim 5, **characterized in that** the separating material (40) carries - on the side opposite to that with the anti-adhesive coating (47) - a coating (46) that is in adhesive contact with the film-like material (30).

10. Packaging unit according to Claim 1, **characterized in that** at least the separating materials (40) are mechanically restrained in the container (10).

11. Packaging unit according to Claim 10, **characterized in that** at least the film-like materials (30) have a perforation (38).

## Revendications

1. Unité d'emballage comprenant un récipient et des matériaux hygroscopiques ou de type film ramollissant en cas d'humidité, **caractérisée en ce que**
- les matériaux (30) de type film sont disposés empilés dans le récipient (10),
- entre respectivement deux matériaux (30) de type film est disposé un matériau de séparation (40) inerte chimiquement et stable physiquement par rapport à ces matériaux (30) de type film,
- le matériau de séparation (40) touche respectivement les deux matériaux (30) de type film cités et
- le matériau de séparation (40) adhère plus ou moins fortement sur au moins l'un de ces deux matériaux (30) de type film que sur respectivement l'autre matériau (30) de type film.

2. Unité d'emballage selon la revendication 1, **caractérisée en ce que** les matériaux (30) de type film présentent une teneur en humidité minimale de trois pour cent en masse.

3. Unité d'emballage selon la revendication 1, **caractérisée en ce que** les matériaux de séparation (40) sont de même grandeur ou plus grands que les matériaux (30) de type film.

4. Unité d'emballage selon la revendication 1, **caractérisée en ce que** le récipient (10) est fermé de manière étanche.

5. Unité d'emballage selon la revendication 1, **caractérisée en ce que** le matériau de séparation (40) individuel est un film en PET qui présente, au moins sur un côté, un revêtement (47) non adhésif.

6. Unité d'emballage selon la revendication 5, **caractérisée en ce que** le revêtement (47) est un revêtement en silicone.

7. Unité d'emballage selon la revendication 5, **caractérisée en ce que** le revêtement (47) est un revêtement en polymère fluoré.

8. Unité d'emballage selon la revendication 5, **caractérisée en ce que** le revêtement (47) est un revêtement polyoléfinique.

9. Unité d'emballage selon la revendication 5, **caractérisée en ce que** le matériau de séparation (40) présente, sur le côté éloigné du revêtement (47) non adhésif, un revêtement (46) qui touche le matériau (30) de type film de manière adhésive.

10. Unité d'emballage selon la revendication 1, **caractérisée en ce qu'**au moins les matériaux de séparation (40) sont bloqués mécaniquement dans le récipient (10).

11. Unité d'emballage selon la revendication 10, **caractérisée en ce qu'**au moins les matériaux (30) de type film présentent une perforation (38).
